# EUROPEAN PATENT SPECIFICATION

(11) **EP 1 805 260 B1**
(45) Date of publication and mention of the grant of the patent: **14.10.2009**
(21) Application number: 05820919.8
(22) Date of filing: 25.10.2005
(51) Int. Cl.: C08L 63/02, C23C 22/02, C09D 163/02, C09D 7/12, H01F 1/18, H01F 41/02

(54) **SELF-BONDING COATING COMPOSITION**
SELBSTBONDIERENDE BESCHICHTUNGSZUSAMMENSETZUNG
COMPOSITION D'UN REVETEMENT AUTO-ADHESIF

(30) Priority: 27.10.2004 US 622373 P
(43) Date of publication of application: 11.07.2007
(73) Proprietor: E.I. DU PONT DE NEMOURS AND COMPANY, Wilmington, DE 19898 (US)
(72) Inventor: WIMMER, Michael, AT-2340 Moedling (AT); POGODINA, Olga, AT-1150 Wien (AT); BOEHM, Frank-rainer, 51519 Odenthal (DE)
(74) Representative: Biering, Christine
(86) International application number: PCT/US2005/038210
(87) International publication number: WO 2006/049935

(56) References cited:
- EP-A- 0 923 088
- EP-A- 1 457 509
- WO-A-96/08526
- WO-A-20/04024811

## Description

### Background of the Invention

The invention relates to a self-bonding coating composition for the production of electrical steel sheets cores for use in electrical equipment.

Self-bonding coating compositions, also named as stoving enamels (enamels or coating compositions that require baking at an elevated temperature), are used to bond individual electrical steel sheets together to form a solid core for the use in electrical equipment, such as transformers, generators and motors, as well as to provide electrical insulation between the metal sheets in core. The coated metal sheets are bonded together by hot pressing.

Normally, the use of stoving enamels is limited because of their relatively low re-softening temperatures. The development of new products is desired that provide for a high re-softening temperature of the coating and accordingly a broader application spectrum in the field of electrical equipment. Additionally, the following improvements in coating properties are desired: higher surface insulation resistance, resistance to mechanical stress and bonding strength.

U. S. 5,500,461 and U. S. 5,500,462 relate to stable aqueous epoxy resin dispersions which contain micronized dicyandiamide and a surface-active agent. The dispersions are suitable for coating the most varied kinds of substrates. These compositions generally are not useful for electrical steel sheets which demand a high level of specific properties, such as, high corrosion resistance and high re-softening temperatures, as are required for use in electrical motors and transformers.

JP 11-193 475 and JP 11-193 476 describe a method for the production of electrical sheets for the production of sheet metal stacks based on an aqueous epoxy resin systems containing a specific phenolic resin of Resol type as crosslinking agent as well as dicyandimide as a latent component. The crosslinking is carried out by polycondensation of the epoxy with the phenolic resin. The coatings are intended to provide elevated adhesion and corrosion resistance on exposure to elevated temperatures.

JP 0733696, JP 2000345360 and EP-A 923 088 relate to enamels for coating electrical steel sheets wherein the enamels contain particles, such as, silica or alumina colloid particles. The compositions result in coatings having properties, such as, good scratch, blocking, chemical and corrosion resistance and high surface insulation ability. But such coatings have no bonding function and need additional means of bonding (welding, clamping, interlocking, aluminium die casting or riveting) to form a solid core.

In WO 00/54286, the use of reactive particles in coating compositions are described for the coating of metal wires to increase the partial discharge resistance and the flexibility of the coated wires. The reactive particles are composed of an element-oxygen network on the surface of which reactive functions are bound by way of the oxygen of the network. In these cases, the requirements of bonding strength are not as strict as the electrical loading of the metal wires in the core but are rather lower than that of the metal sheets.

### Summary of the Invention

This invention provides a self-bonding coating composition for the production of electrical steel sheets cores ensuring increased re-softening temperatures as well as excellent bonding strength, corrosion resistance and electrical insulation of the coating, the composition comprising:
A) 100 parts per weight of at least one epoxy resin based on bisphenol-A-type and/or bisphenol-F-type, 100% of solids,
B) 0.1 to 200 parts per weight of nano particles having an average radius ranging from 2 to 600 nm,
C) 0 to 25 parts per weight of dicyandiamide and/or at least one blocked isocyanate or at least one phenolic resin, carboxylic acid and/or the anhydride and/or Lewis acid, 100% of solids,
D) 0.1 to 10 parts per weight of at least one additive, and
E) 50 to 200 parts per weight of water or at least one organic solvent.

The composition according to the invention makes it possible to produce electrical steel sheets cores which, when used in electrical equipment, such as, motors, generators or transformers, allow a long service life of said equipment by providing an improved re-softening temperatures of the coating and electrical insulation even on exposure to voltage fluctuations. The requirements for good corrosion resistance, excellent bonding strength and an increased punchability of the coated steel sheets are also fulfilled. By using the composition according to the invention, the squeezing of the coating under the pressure load is low and an elevated resistance to mechanical stress is obtained.

### Brief Description of the Figures

Figure 1 shows the dependence of bonding strength from the temperature of the substrate for a core of steel sheets having a coating composition according to the invention in comparison to a core of steel sheets having a coating composition of the prior art.
Figure 2 shows the dependence of surface insulation resistance from the film thickness for a core of steel sheets having the coating composition according to the invention in comparison to a core of steel sheets having a coating composition of the prior art.

### Detailed Description of the Invention

The composition according to the invention is possible to apply as water-based or solvent-based coating composition.

With regard to the water-based composition at least one flow agent is used as component F) in amounts of 0.1 to 120 parts per weight, 100% of solids, in addition to the components A) to E).

With regard to the solvent-based composition at least one modified phenol novolak resin is used as component G) in amounts of 1 to 20 parts per weight, 100% of solids, in addition to the components A) to E).

As component A) one or more epoxy resins based on bisphenol A type and/or bisphenol F type are used. The composition A) to E) is related to 100 parts per weight of solids of the epoxy resin.

The number average molar mass Mn of the epoxy resin is from about 350 to 50,000, the epoxy equivalent weight from about 200 to 60,000 g/equ (gram/equivalent).

With regard to the solvent-based composition according to the invention the number average molar mass Mn of the epoxy resin is preferably from about 3000 to 4000, the epoxy equivalent weight preferably from about 1500 to 3000 g/equ.

The production of the epoxy resins based on bisphenol-A-type and/or bisphenol-F-type is known from the specialist literature. The bisphenol-A-type epoxy resin is a condensation product of bisphenol-A and epichlorohydrin, the bisphenol-F-type epoxy resin is a condensation product of bisphenol-F and epichlorohydrin. e.g., bisphenol-A is obtained by an acid-catalysed condensation of acetone with phenol. The reaction takes place via a chlorohydrin intermediate chemical product, e.g., epichlorohydrin, resulting in bisphenol-A-diglycidylether (DGEBA). The still existing DGEBA can further react, when mixed with bisphenol-A, to high molecular linear polyethers. The higher-molecular epoxy resins can also be synthesized by means of one-step process known by the experts as "taffy" (that means a one-step process).

The epoxy resin of component A) is preferably used as an aqueous dispersion regarding the water-based composition according to the invention. The epoxy resin is used in a quantity of 40 to 70 wt.% in the aqueous dispersion.

The epoxy resin of component A) can also be at least one self cross-linkable epoxy resin, such as, e.g., epoxy novolak resin, as well as the known epoxy hybrid resin, for example, urethane-modified epoxy resin, acryl-modified epoxy resin and epoxy ester.

Other binders than the mentioned epoxy resins are additionally useful in the composition according to the invention, such as, phenol novolak resins, acrylic resins, polyamide resins, polyimide resins, polyurethane resins, silicon resins, polyesters, polyolefins, fluoride resins, polyvinylbutyral resins. With regard to a water-based composition according to the invention the additional binders are preferably used as aqueous compositions in quantities of below 20 wt.%, relative to the composition A) to D).

The modified phenol-novolak of component G), which is additionally used in solventborne compositions according to the invention is a polyfunctional epoxidized phenol novolak and has an epoxy equivalent weight from about 160 to 180 g/equ. The epoxy functionality is from 2.0 to 2.5. This component G) is used in amounts of 1 to 20 parts per weight, preferably, 2 to 12 parts per weight, particularly preferred, 3 to 7 parts per weight, 100% of solids, in addition to the components A) to E).

As component B) nano particles are used, which can be reactive particles based on an element-oxygen network, wherein the elements are selected from the group consisting of silicon, aluminium, zinc, tin, boron, germanium, gallium, lead, the transition metals, the lanthanides and actinides, particularly of the series comprising titanium, cerium and/or zirconium. The surface reactive functional groups R¹ and non-reactive or partly reactive functional groups R² and R³ are bonded by means of oxygen network, where R¹ is in the amount up to 98 wt.%, preferably, to 40 wt.%, particularly preferred, to 30 wt.%, R² and R³ are in the amount from 0 to 97 wt.%, preferably, 0 to 40, particularly preferred, 0 to 10 wt.% present on the surface of reactive particles, R¹ stand for radicals of metal acid esters containing R4, as, for example, OTi(OR⁴)₃, OZr(OR⁴)₃, OSi(OR⁴)₃, OSi(R⁴)₃; OHf(OR⁴)₃; NCO; urethane-, epoxy, carbon acid anhydride; C=C-double bonding systems as, for example, methacrylate, acrylate; OH; oxygen bonded alcohols, for example, bis(1-hydroxymethyl-propane)-1- methylolate, 2,2-Bis-(hydroxymethyl)-1-propanol-3-propanolate, 2-hydroxy-propane-1-ol-3-olate, esters, ethers, for example, 2-hydroxyethanolate, C₂H₄OH, diethylenglykolate, C₂H₄OC₂H₄OH, triethylenglykolate, C₂H₄OC₂H₄OC₂H₄OH; chelate builders, for example, aminotriethanolate, aminodiethanolate, acetylacetonate, ethylacetoacetate, lactate; COOH; NH₂; NHR⁴; and/or esters, reactive binders, as, for example, OH-, SH-, COOH-, NCO-, blocked NCO-, NH₂-, epoxy-, carbon acid anhydride-, C=C-, metal acid ester-, silane-containing polyurethane, polyester, poly(THEIC)ester, poly(THEIC)esterimide, polyamidimide, polyamide, polysiloxane, polysulfide, polyvinylformale, polymerisate, for example, polyacrylate. R² stands for radicals of aromatic compounds, for example, phenyl, cresyl, nonylphenyl, aliphatic compounds, for example, branched, linear, saturated, unsaturated alkyl rests C1 to C30, fatty acids derivatives; linear or branched esters and/or ethers, R³ stands for resin radicals, for example, polyurethane-, polyester-, polyesterimide-, THEIC-polyesterimide-, polytitanester resins and their derivatives; polysiloxane resin with organic derivatives; polysulfide-, polyamide-, polyamidimide-, polyvinylformale resin, and/or polymers, as, for example, polyacrylate, polyhydantoine, polybenzimidazole, and R⁴ stands for radicals of acrylate, phenol, melamine, polyurethane, polyester, polyesterimide, polysulfide, epoxy, polyamide, polyvinylformal resins; aromatic compounds, for example phenyl, cresyl, nonylphenyl; aliphatic, for example, branched, linear, saturated, unsaturated alkyl rests with C1 to C30; esters; ethers, for example, methylglykolat, methyldiglykolat, ethylglykolat, butyldiglykolat, diethylenglykolat, triethylenglykolat; alcoholate, for example, 1-hydroxymethyl-propane-1,1-dimethylolate, 2,2-Bis-(hydroxymethyl)-1,3-propandiolate, 2-hydroxy-propane-1,3-diolate, ethylenglykolate, neopentylglykolate, hexandiolate, butandiolate; fats, for example, dehydrated caster oil and/or chelate builder, for example, aminotriethanolate, aminodiethanolate, acetylacetonate, ethylacetoacetate, lactate.

The preparation of such particles may take place by conventional hydrolysis and condensation reactions of appropriate element-organic or element-halogen compounds and flame pyrolysis. Similarly, an organic resin may be reacted with corresponding element-oxide compounds to the corresponding reactive particle. A surface treatment can be carried out during the particle formation or after particle formation. Such methods of preparation are described in the literature. (See, e.g. R. Keller, John Wiley and Sons, "The Chemistry of Silica", New York, p.312, 1979.)

Examples of suitable reactive particles are Aerosil products from Degussa AG, preferably Aerosil^{®} R 100-8000.

As component B) also non-reactive particles can, be used, wherein said particles are based on an element-oxygen network, wherein the elements are selected from the group consisting of silicon, aluminium, zinc, tin, boron, germanium, gallium, lead, the transition metals, the lanthanides and actinides, particularly of the series comprising titanium, cerium and/or zirconium without any functional group which are able to make the particles reactive. Usable particles are, e.g., colloidal solution or dispersions of such particles, like silica, aluminum oxide, titanium oxide, preferably, colloidal silica, which are commercial available from, e.g., Nyacol^{®} Corp., Grace Davison (Ludox^{®} colloidal silica in water), Nissan Chemical.

The nano particles of component B) have an average radius ranging from 2 to 600 nm, preferably, from 2 to 100 nm, particularly preferred, from 4 to 80 nm.

According to the invention the nano particles are introduced in the coating composition in the amount of 0.1 to 200 parts per weight, preferably, 0.1 to 50 parts per weight, particularly preferred, 0.2 to 12 parts per weight.

Dicyandiamide and/or at least one blocked isocyanate or at least one phenolic resin, carboxylic acid and/or the anhydride and/or Lewis acid is used as component C) as curing agent component. The component C) is used in a quantity of 0 to 25 parts per weight, preferably of 2 to 15 parts per weight regarding the use of dicyandiamide and/or blocked isocyanate, and preferably of 1 to 20 parts per weight regarding the use of phenol resin, and 0.1 to 10 parts per weight regarding the use of carbon acid, anhydride and/or Lewis acid.

Dicyandiamide can be used in water-based compositions according to the invention, preferably, micronized dicyandiamide. Micronized means that the dicyandiamide has been appropriately processed so that it has an average particle size of between 0.1 and 50 µm, preferably, of between 1 and 20 µm. The particle size of the dicyandiamide is particularly preferably no greater than 8 µm, especially no greater than 6 µm. Micronization of dicyandiamide is-normally done with a compressed-air mill where the particles are shot by air towards each other and by this process comminute themselves. A classifier facilitates the desired size classification of the particles according to the specification.

Blocked isocyanate can also be used in water-based compositions according to the invention. Diisocyanates conventionally used in polyurethane chemistry can be used as the isocyanates, such as, adductes of polyols, amines and/or CH-acid compounds with diisocyanates. These include, for example, hexamethylene diisocyanate, isophorone diisocyanate, 2,4-(2,6)-toluylene diisocyanate, dicyclohexyl diisocyanate, 4,4-diphenylmethane diisocyanate (MDI). Derivatives of MDI, such as, isomers, homologs or prepolymers, such as, for example, Desmodur PF^{®}, can also be used. 4,4-diphenylmethane diisocyanate is used in preference.

Blocking of the isocyanates can be achieved by conventional means with, e.g., phenols or cresols, for example, with butanone oxime, phenol, 4-hydroxybenzoic acid methylester, ethanoic acid ester, malonic acid ester, dimethyl pyrazole and/or caprolactame. While caprolactame is used in preference, combinations from several of the mentioned compounds are also possible.

In solvent-based compositions according to the invention, at least one phenolic resin can be used as component C). These are polycondensation products of phenols and aldehydes, especially formaldehyde, and can be the known novolaks and/or resoles.

Carboxylic acids and/or anhydrides can also be used as component C) in solvent-based compositions according to the invention. These can be aliphatic, aromatic branched and un-branched carboxylic acids and/or the esters and/or the anhydrides, e.g., formic acid, acetic acid, valeric acid, caproic acid, isobutyric acid, pivalic acid, isovaleric acid, trimellitic acid, pyromellitic acid, naphthalic acid, the esters and the anhydrides.

Lewis acids are also usable in water-based and solvent-based compositions according the invention, such as, e.g., boric trifluoride, aluminium chloride.

The addition of additives as component D), such as, for example, levelling agents, catalysts, pigments, fillers, non-ionic and ionic surfactants as well as slip additives, in a quantity of 0.1 to 10 parts per weight makes it possible to optimize the coating system with regard to the quality of the coating, such as, for example, surface application, increasing stoving velocity or imparting colour.

As component E) organic solvents are used with regard to solvent-based coating compositions according to the invention. Examples for suitable organic solvents are aromatic hydrocarbons, n-methylpyrrolidone, cresols, phenols, alcohols, styrenes, acetates, vinyl toluene, methyl acrylates, such as, e.g. 1-methoxy propyl acetate-2, n-butanol, n-propanol, butyl glycol acetate.

As flow agents, component F), organic solvents and polyglycols are usable. Preferably, polyglycol and its derivates are used, preferably, in amounts of 2 to 70 parts per weight.

One or more monomeric organo-metallic compounds, such as, e.g., ortho-titanic or -zirconic acid esters as well as silanes, ethylsilicates, titanates, may be contained in the coating composition according to the invention.

The composition according to the invention may be produced by simply mixing the individual components together. For example, it is possible to produce an epoxy resin dispersion by mixing the epoxy resin with water. The dicyandiamide and the further components are then added, for example, with stirring, to produce a stable dispersion, optionally, with input of heat and dispersing agents. It is also possible to produce a mixture of the epoxy resin with the organic solvent. The phenol resin and the further components are then added, e.g., by stirring. After that, the reactive particles are added to the respective dispersion mixture.

Water or organic solvents as component E) are added in a quantity such that a solids content of 30 to 60% is obtained for the finished composition.

Application of the composition by the process according to the invention proceeds in known manner, e.g., by spraying, rolling or dipping coating onto one or both sides of the electrical steel sheet surface as one or more layers with a dry layer thickness of 1 to 20 µm, preferably, 2 to 12 µm, particularly preferred, 3 to 8 µm per layer.

The surface of the electrical steel sheet may here be coated or uncoated, pretreated or unpretreated. The sheets may be pretreated, for example, by washing in order to remove soiling, grease and other deposits. Preferred pre-washed and uncoated electrical steel sheets are used, coated with the composition according to the invention, preferably by a one-layer-coating.

Subsequently the drying of the coating takes places effected preferably by forced drying process at temperatures providing a PMT (peak metal temperature) in the range of 230 to 260°C. The dry film forms a so-called protective layer thereby maintaining the active state of the coating. This means that the chemical cross-linking has not taken place and the coating can be activated under the hot pressing to perform a bonding function. In the active state, the coated electrical steel sheet is stable in storage.

After the drying, parts can be punched out of the coated steel sheet and can then be stacked and assembled to form a sheets core. By the supply of heat and pressure, the coating of the individual sheets bonds them together by cross-linking reaction by thermal curing under the definite curing conditions, preferably at temperatures from 100 to 300°C and at a pressure of 1.0 to 6.0 N/mm² during a fixed time period, e.g., 60 to 120 minutes. The necessary heat can be supplied, for example, in an oven, by means of induction heating, IR-radiation and/or hot air.

Bonding of the coated electrical steel sheets can be affected in different manners. It is possible to bond sheets with a coating in active state on both sides; sheets with a coating in active state on one side can be used together with sheets having a cured coating (passive state) on the other side. Furthermore, the-sheets having a coating in active state can be bonded together with uncoated sheets.

After the curing process has been finished, the coating between the sheets in core shows a passive state that means the chemical crosslinking reaction is completed.

The composition according to the invention makes it possible to ensure a long service life of electrical equipment, such as, motors and transformers.

The self-bonding composition according to the invention can also be used for the production of coated metal conductors, such as, wires in order to obtain high performance magnet wires for all kinds of electrical appliances. It can be applied as liquid solutions on a wire, e.g., on a precoated wire, by evaporating the solvent during a curing process to result in a flexible coating.

### Examples

### Example 1

### Manufacture of Coatings According to the Invention Based on Aqueous Compositions

As binding agent, an aqueous dispersion is used consisting of bisphenol-A-type epoxy resin with a solid content of 51 to 55% and 7% of 1-methoxy-2-propanol and < 3% benzyl alcohol as well as water. A micronized dicyandiamide is used in amounts as indicated in Table 1 calculated for the 100 parts of 100% solid epoxy resin. Consequently the addition of 2 parts per weight of the flow agent BYK^{®}-341 and 12 parts per weight of diethylene glycol monobutylether is processed. The mixture is stirred until it becomes homogeneous. On the last step, Aerosil^{®} R 7200 as nano particles is added in amounts as indicated in Table 1.

The coating composition is applied on electrical steel sheets by rolling and after the forced drying by PMT (peak metal temperature) 240-250°C a coating in active state is obtained with the film thickness of approx. 4 µm. Subsequently, the sheets are cut to a certain size and bonded together in stacks for 90 min. at a pressure of 3 N/mm² and a PMT of 200°C to produce the steel sheets core.

The bonding strength is measured by floating roller peel test according to DIN EN 1464.

The re-softening temperature (RT) is stated as the temperature where a bonding strength of at least 50% of the bonding strength, measured with the shear strength test according to DIN EN 1465 at room temperature is preserved.

The salt spray test is measured according to DIN EN ISO 7253. The test is evaluated according to ISO 4628.

**Table 1**

| No | Epoxy resin (100% solids) | Nano particles | Dicyandiamide | Bonding strength DIN EN 1464 | RT (bonding strength of at least 50% as defined) | Salt spray test DIN ISO 7253 ISO 4628 |
|---|---|---|---|---|---|---|
| | [parts per weight] | [parts per weight] | [parts per weight] | [N/mm] | [°C] | |
| 1 | 100 | 0.1 | 1 | 6 | 141 | m=0, g=0; |
| | | | | | | Ri=0; |
| | | | | | | W_{d}=1 mm |
| 2 | 100 | 0.5 | 3 | 8 | 144 | m=0, g=0; |
| | | | | | | Ri=0; |
| | | | | | | Wd=0 mm |
| 3 | 100 | 1 | 4 | > 9 | 150 | m=0, g=0; |
| | | | | | | Ri=0; |
| | | | | | | Wd=0 mm |
| 4 | 100 | 3 | 5 | > 9 | 150 | m=0, g=0; |
| | | | | | | Ri=0; |
| | | | | | | Wd=0 mm |
| 5 | 100 | 5 | 6 | > 9 | 153 | m=0, g=0; |
| | | | | | | Ri=0; |
| | | | | | | Wd=0 mm |
| 6 | 100 | 7 | 7 | 8 | 159 | m=0, g=0; |
| | | | | | | Ri=0; |
| | | | | | | Wd=0 mm |
| 7 | 100 | 10 | 25 | 7 | 159 | m=0, g=0; |
| | | | | | | Ri=0; |
| | | | | | | W_{d}=0 mm |

### Example 2

### Manufacture of Coatings According to the Invention Based on SolventBorne Compositions

As binding agent, solvent solution of solid, bisphenol A based, high molecular epoxy resins is used. The solid content of 40 to 50% is achieved applying 1-methoxy propyl acetate-2. As crosslinking agents, a phenolic resin of resol-type and a modified phenol novolak with an epoxy equivalent weight of 160 to 170 g/equ and an epoxy functionality of 2.0 are used as indicated in Table 2 each one calculated for the 100 parts of 100% solid epoxy resin. Consequently the addition of 1 part per weight of the flow agent BYK^{®}-310 is processed. On the last step Aerosil^{®} R 7200 as nano particles is added to formulation in amounts as indicated in Table 2.The mixture is stirred until it becomes homogeneous.

The coating composition is applied on electrical steel sheets by rolling and after the forced drying by PMT 220-230°C a coating in active state is obtained with the film thickness of approx. 4 µm. Subsequently, the sheets are cut to a certain size and bonded together in stacks for 90 min. at a pressure of 3 N/mm² and a PMT of 200°C to produce the steel sheets core.

**Table 2**

| No | Epoxy-resin (100% solids) | Nano particles | Phenolic resin + phenol novolak (100% solids, weight ratio 50 : 50) | Bounding strength DIN EN 1464 | RT (bonding strength of at least 50% as defined) | Salt spray test DIN ISO 7253 ISO 4628 |
|---|---|---|---|---|---|---|
| | [parts per weight] | [parts per weight] | [parts per weight] | [N/mm] | [°C] | |
| 1 | 100 | 0.1 | 3 | 7 | 135 | m=0, g=0; |
| | | | | | | Ri=1; |
| | | | | | | W_{d}=1 mm |
| 2 | 100 | 0.5 | 5 | > 9 | 142 | m=0, g=0; |
| | | | | | | Ri=0; |
| | | | | | | Wd=0 mm |
| 3 | 100 | 1 | 7 | > 9 | 149 | m=0, g=0; |
| | | | | | | Ri=0; |
| | | | | | | Wd=0 mm |
| 4 | 100 | 3 | 10 | > 9 | 150 | m=0, g=0; |
| | | | | | | Ri=0; |
| | | | | | | Wd=0 mm |
| 5 | 100 | 5 | 15 | > 9 | 150 | m=0, g=0; |
| | | | | | | Ri=0; |
| | | | | | | Wd=0 mm |
| 6 | 100 | 7 | 20 | 8 | 155 | m=0, g=0; |
| | | | | | | Ri=0; |
| | | | | | | Wd=0 mm |
| 7 | 100 | 10 | 32 | 7 | 155 | m=0, g=0; |
| | | | | | | Ri=0; |
| | | | | | | W_{d}=0 mm |

### Example 3:

### Coating on Electrical Steel Sheet in Comparison With the Prior art

Composition No. 7 according to JP H11-193475 comprises:
100 parts per weight (solids) of a water dispersible Bisphenol-A-type epoxy resin and 15 parts per weight (solids) of a phenolic resin based on a reaction product of 1 mol Bisphenol A and 7 mol formaldehyde, the content of methylolated components higher than dimethylolated components is 98.3 wt%, were mixed together with water and stirred to obtain the coating composition with a solids content of the composition of 20 wt.%.

The composition No. 4 of U. S. 10/788,985 comprises the same components as of the composition No. 4 of Example 1 according to the invention containing dicyandiamide in amounts of 5 parts per weight, but without any nano particles in the composition.

The application and drying procedure as well as the production of the steel sheets core are the same as described in Example 1 and 2.

**Table 3**

| Composition | Film thickness | Bonding strength (DIN EN 1464) | Bonding strength (DIN EN 1465) | RT (bonding strength of at least 50%, as defined) | Salt spray test DIN EN ISO 7253 ISO 4628 | Surface insulation resistance ASTM A 717 M-93 [Ohm x cm² / L] |
|---|---|---|---|---|---|---|
| | [µm] | [N/mm²] | [N/mm²] | [°C] | | |
| Composition according to No.4 of US 10/788,985 | 4 | 8 | >19 | 120 | m=0, g=0; | 200 |
| | | | | | Ri = 0; | |
| | | | | | Wd = 0 mm | |
| JP H11-193475 No. 7 | 5 | ---- | > 16 | ----- | Ri = 0 - 1 | ---- |
| No. 4 according to the invention (Table 1) | 4 | > 9 | >19 | 150 | m=0, g=0; | 350 |
| | | | | | Ri = 0; | |
| | | | | | W_{d}= 0 mm | |

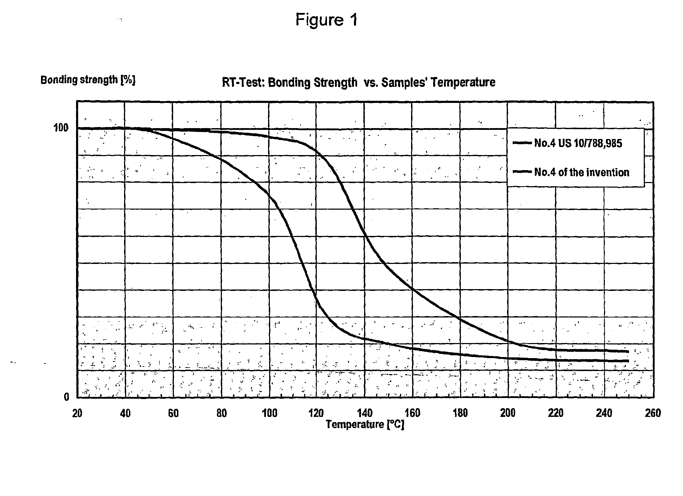

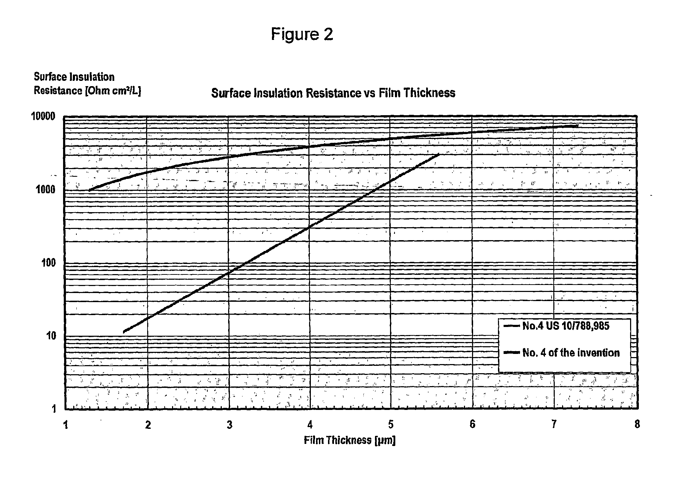

The tests of bonding strength and the resistance to salt spray show better results for the composition No. 4 according to the invention than for the composition according to JP-H11-193475. The surface insulation resistance and the re-softening temperature show better values of compositions No. 4 according to the invention in comparison with the composition No. 4 of US 10/788,985, see Table 3, and Figures 1 and 2.

## Claims

1. A self-bonding coating composition for the production of electrical steel sheets cores comprising
A) 100 parts per weight of at least one epoxy resin based on bisphenol-A-type, bisphenol-F-type or mixtures thereof, 100% of solids,
B) 0.1 to 200 parts per weight of nano particles having an average radius ranging from 2 to 600 nm,
C) 0 to 25 parts per weight of at least one curing agent selected from the group consisting of dicyandiamide, blocked isocyanate and Lewis acid or selected from the group consisting of phenolic resin, carboxylic acid, anhydride and Lewis acid, 100% of solids,
D) 0.1 to 10 parts per weight of at least one additive, and
E) 50 to 200 parts per weight of water or at least one organic solvent.

2. The self-bonding coating composition according to claim 1 wherein at least one flow agent is used as component F) in amounts of 0.1 to 120 parts per weight, 100% of solids, in addition to the components A) to E), for a water-based composition.

3. The self-bonding coating composition according to claim 1 wherein at least one modified phenol novolak resin is used as component G) in amounts of 1 to 20 parts per weight, 100% of solids, in addition to the components A) to E), for a solvent-based composition.

4. The self-bonding coating composition according to claim 1 wherein the nano particles having an average radius ranging from 2 to 100 nm.

5. The self-bonding coating composition according to claim 1 wherein the nano particles are reactive particles based on an element-oxygen network, wherein the elements are selected from the group consisting of silicon, aluminium, zinc, tin, boron, germanium, gallium, lead, the transition metals, the lanthanides and actinides, wherein surface reactive functional groups R¹ and non-reactive or partly reactive functional groups R² and R³ are bonded by means of oxygen network, where R¹ is in the amount up to 98 wt.%, R² and R³ are in the amount from 0 to 97 wt.% on the surface of reactive particles, in which R¹ comprises radicals selected from the group consisting of metal acid esters containing R⁴; NCO; urethane groups, epoxy, carbon acid anhydride; C=C-double bonding systems; OH; oxygen bonded alcohols, esters, ethers; chelate builders; COOH; NH2; NHR⁴ and reactive binders,
R² comprises radicals selected from the group consisting of aromatic compounds, aliphatic compounds, fatty acids derivatives; esters and ethers,
R³ comprises resin radicals, and
R⁴ comprises radicals selected from the group consisting of acrylate, phenol, melamine, polyurethane, polyester, polyesterimide, polysulfide, epoxy, polyamide, polyvinylformal resins, aromatic compounds, aliphatic compounds, esters, ethers, alcoholates, fats and chelate builders.

6. The self-bonding coating composition according to claim 1 wherein the nano particles are non-reactive particles based on an element-oxygen network, wherein the elements are selected from the group consisting of silicon, aluminum, zinc, tin, boron, germanium, gallium, lead, the transition metals, the lanthanides and actinides.

7. The self-bonding coating composition according to claim 6 wherein silica, aluminum oxide and/or titanium oxide are used as nano particles in a colloidal solution or dispersion.

8. The self-bonding coating composition according to claim 2 wherein at least one curing agent selected from the group consisting of dicyandiamide, blocked isocyanate and Lewis acid, 100% of solids, is used.

9. The self-bonding coating composition according to claim 3 wherein at least one curing agent selected from the group consisting of phenolic resin, carboxylic acid, anhydride and Lewis acid, 100% of solids, is used.

10. The self-bonding coating composition according to claim 1 wherein one or more organo-metallic compounds selected from the group consisting of ortho-titanic acid ester, ortho-zirconic acid ester, silane, ethylsilicate and titanate are additionally used.

11. A process for the production of electrical steel sheets cores comprising the following steps
a) applying of at least one coating layer of the composition according to claim 1 onto the surface of the electrical steel sheet,
b) drying the applied layer under increased temperature, and
c) assembling of the coated steel sheets to form a sheets core and bonding the sheets with each other by thermal curing.

12. A process for the production of electrical steel sheets cores comprising the following steps
a) applying of at least one coating layer of the composition according to claim 2 onto the surface of the electrical steel sheet,
b) drying the applied layer under increased temperature, and
c) assembling of the coated steel sheets to form a sheets core and bonding the sheets with each other by thermal curing.

13. A process for the production of electrical steel sheets cores comprising the following steps
a) applying of at least one coating layer of the composition according to claim 3 onto the surface of the electrical steel sheet,
b) drying the applied layer under increased temperature, and
c) assembling of the coated steel sheets to form a sheets core and bonding the sheets with each other by thermal curing.

14. The process according to claim 11 wherein the composition is produced by production of an epoxy dispersion by mixing the epoxy resin with water or by production of an epoxy mixture with at least one organic solvent and then adding the current agent and the further components of the composition.

15. The process according to claim 11 wherein the composition is applied onto the steel sheet as one-layer coating with a dry layer thickness of 3 to 8 µm.

16. An electrical steel sheets core for use in electrical equipment produced by the process according to claim 11.

## Patentansprüche

1. Selbstbondierende Beschichtungszusammensetzung für die Herstellung von Elektrostahlblechkernen umfassend
A) 100 Gewichtsteile mindestens eines Epoxidharzes auf der Basis des Bisphenol-A-Typs, Bisphenol-F-Typs oder Mischungen derselben, 100 % Feststoffe,
B) 0,1 bis 200 Gewichtsteile Nanoteilchen, die einen durchschnittlichen Radius im Bereich von 2 bis 600 nm aufweisen,
C) 0 bis 25 Gewichtsteile mindestens eines Aushärtungsmittels ausgewählt aus der Gruppe bestehend aus Dicyandiamid, geblocktem Isocyanat und Lewis-Säure oder ausgewählt aus der Gruppe bestehend aus Phenolharz, Carbonsäure, Anhydrid und Lewis-Säure, 100 % Feststoffe,
D) 0,1 bis 10 Gewichtsteile mindestens eines Zusatzmittels und
E) 50 bis 200 Gewichtsteile Wasser oder mindestens eines organischen Lösungsmittels.

2. Selbstbondierende Beschichtungszusammensetzung nach Anspruch 1, wobei mindestens ein Fließmittel als Komponente F) in Mengen von 0,1 bis 120 Gewichtsteilen, 100 % Feststoffe, zusätzlich zu den Komponenten A) bis E) für eine Zusammensetzung auf Wasserbasis verwendet wird.

3. Selbstbondierbeschichtungszusammensetzung nach Anspruch 1, wobei mindestens ein modifiziertes Phenolnovolakharz als Komponente G) in Mengen von 1 bis 20 Gewichtsteilen, 100 % Feststoffe, zusätzlich zu den Komponenten A) bis E) für eine Zusammensetzung auf Lösungsmittelbasis verwendet wird.

4. Selbstbondierende Beschichtungszusammensetzung nach Anspruch 1, wobei die Nanoteilchen einen durchschnittlichen Radius im Bereich von 2 bis 100 nm aufweisen.

5. Selbstbondierende Beschichtungszusammensetzung nach Anspruch 1, wobei die Nanoteilchen reaktive Teilchen auf der Basis eines Elementsauerstoffnetzwerks sind, wobei die Elemente aus der Gruppe ausgewählt sind bestehend aus Silicium, Aluminium, Zink, Zinn, Bor, Germanium, Gallium, Blei, den Übergangsmetallen, den Lanthaniden und Actiniden, wobei oberflächenreaktive funktionelle Gruppen R¹ und nichtreaktive oder teilweise reaktive funktionelle Gruppen R² und R³ durch ein Sauerstoffnetzwerk gebunden sind, wobei R¹ in der Menge von bis zu 98 Gew.-% vorliegt, R² und R³ in der Menge von 0 bis 97 Gew.-% auf der Oberfläche reaktiver Teilchen vorliegen, wobei R¹ Radikale umfasst, die aus der Gruppe ausgewählt sind bestehend aus Metallsäureestern, die R⁴ enthalten; NCO; Urethangruppen, Epoxy, Carbonsäureanhydrid; C=C-Doppelbindungssystemen; OH; sauerstoffgebundenen Alkoholen, Estern, Ethern; Chelatgerüststoffen; COOH; NH2; NHR⁴ und reaktiven Bindemitteln,
R² Radikale umfasst, die aus der Gruppe ausgewählt sind bestehend aus aromatischen Verbindungen, aliphatischen Verbindungen, Fettsäurederivaten; Estern und Ethern,
R³ Harzradikale umfasst und
R⁴ Radikale umfasst, die aus der Gruppe ausgewählt sind bestehend aus Acrylat, Phenol, Melamin, Polyurethan, Polyester, Polyesterimid, Polysulfid, Epoxy, Polyamid, Polyvinylformalharzen, aromatischen Verbindungen, aliphatischen Verbindungen, Estern, Ethern, Alkoholaten, Fetten und Chelatgerüststoffen.

6. Selbstbondierende Beschichtungszusammensetzung nach Anspruch 1, wobei die Nanoteilchen nichtreaktive Teilchen auf der Basis eines Elementsauerstoffnetzwerks sind, wobei die Elemente aus der Gruppe ausgewählt sind bestehend aus Silicium, Aluminium, Zink, Zinn, Bor, Germanium, Gallium, Blei, den Übergangsmetallen, den Lanthaniden und Actiniden.

7. Selbstbondierende Beschichtungszusammensetzung nach Anspruch 6, wobei Siliciumdioxid, Aluminiumoxid und/oder Titandioxid als Nanoteilchen in einer kolloidalen Lösung oder Dispersion verwendet werden.

8. Selbstbondierende Beschichtungszusammensetzung nach Anspruch 2, wobei mindestens ein Aushärtungsmittel ausgewählt aus der Gruppe bestehend aus Dicyandiamid, geblocktem Isocyanat und Lewis-Säure, 100 % Feststoffe, verwendet wird.

9. Selbstbondierende Beschichtungszusammensetzung nach Anspruch 3, wobei mindestens ein Aushärtungsmittel ausgewählt aus der Gruppe bestehend aus Phenolharz, Carbonsäure, Anhydrid und Lewis-Säure, 100 % Feststoffe, verwendet wird.

10. Selbstbondierende Beschichtungszusammensetzung nach Anspruch 1, wobei eine oder mehrere Organometallverbindung(en) ausgewählt aus der Gruppe bestehend aus Orthotitansäureester, Orthozirkonsäureester, Silan, Ethylsilicat und -titanat zusätzlich verwendet werden.

11. Verfahren für die Herstellung von Elektrostahlblechkernen, umfassend die folgenden Schritte:
a) Aufbringen mindestens einer Beschichtungsschicht aus der Zusammensetzung nach Anspruch 1 auf die Oberfläche des Elektrostahlblechs
b) Trocknen der aufgebrachten Schicht unter erhöhter Temperatur und
c) Zusammenbauen des beschichteten Stahlblechs unter Bildung eines Blechkerns und Bondieren der Bleche miteinander durch Wärmeaushärten.

12. Verfahren für die Herstellung von Elektrostahlblechkernen, umfassend die folgenden Schritte:
a) Aufbringen mindestens einer Beschichtungsschicht aus der Zusammensetzung nach Anspruch 2 auf die Oberfläche des Elektrostahlblechs,
b) Trocknen der aufgebrachten Schicht unter erhöhter Temperatur und
c) Zusammenbauen der beschichteten Stahlbleche unter Bildung eines Blechkerns und Bondieren der Bleche miteinander durch Wärmeaushärten.

13. Verfahren für die Herstellung von Elektrostahlblechkernen umfassend die folgenden Schritte:
a) Aufbringen mindestens einer Beschichtungsschicht aus der Zusammensetzung nach Anspruch 3 auf die Oberfläche des Elektrostahlblechs,
b) Trocknen der aufgebrachten Schicht unter erhöhter Temperatur und
c) Zusammenbauen der beschichteten Stahlbleche unter Bildung eines Blechkerns und Bondieren der Bleche miteinander durch Wärmeaushärten.

14. Verfahren nach Anspruch 11, wobei die Zusammensetzung durch Herstellen einer Epoxiddispersion durch Mischen des Epoxidharzes mit Wasser oder durch Herstellen einer Epoxidmischung mit mindestens einem organischen Lösungsmittel und daraufhin Hinzusetzen des Strommittels und der weiteren Komponenten der Zusammensetzung hergestellt wird.

15. Verfahren nach Anspruch 11, wobei die Zusammensetzung auf das Stahlblech als einschichtige Beschichtung mit einer Trockenschichtdicke von 3 bis 8 µm aufgebracht wird.

16. Elektrostahlblechkern zur Verwendung in Elektrogeräten, der durch das Verfahren nach Anspruch 11 hergestellt wird.

## Revendications

1. Composition de revêtement auto-adhésive pour la fabrication de noyaux de feuilles d'acier électriques, comprenant
A) 100 parties en poids d'au moins une résine époxy à base d'un ingrédient de type bisphénol-A, de type bisphénol-F ou de mélanges de ceux-ci, 100% de substances solides,
B) 0,1 à 200 parties en poids de nanoparticules ayant un rayon moyen allant de 2 à 600 nm,
C) 0 à 25 parties en poids d'au moins un agent durcisseur choisi dans le groupe constitué par le dicyandiamide, un isocyanate bloqué et un acide de Lewis ou choisi dans le groupe constitué par une résine phénolique, un acide carboxylique, un anhydride et un acide de Lewis, 100% de substances solides,
D) 0,1 à 10 parties en poids d'au moins un additif, et
E) 50 à 200 parties en poids d'eau ou d'au moins un solvant organique.

2. Composition de revêtement auto-adhésive selon la revendication 1, dans laquelle au moins un agent d'écoulement est utilisé en tant que constituant F) en des quantités de 0,1 à 120 parties en poids, 100% de substances solides, en plus des constituants A) à E), pour une composition à base d'eau.

3. Composition de revêtement auto-adhésive selon la revendication 1, dans laquelle au moins une résine phénolique novolaque modifiée est utilisée en tant que constituant G) en des quantités de 1 à 20 parties en poids, 100% de substances solides, en plus des constituants A) à E) pour une composition à base de solvant.

4. Composition de revêtement auto-adhésive selon la revendication 1, dans laquelle les nanoparticules ont un rayon moyen allant de 2 à 100 nm.

5. Composition de revêtement auto-adhésive selon la revendication 1, dans laquelle les nanoparticules sont des particules réactives à base d'un réseau éléments-oxygène, dans lequel les éléments sont choisis dans le groupe constitué par le silicium, l'aluminium, le zinc, l'étain, le bore, le germanium, le gallium, le plomb, les métaux de transition, les lanthanides et les actinides, dans laquelle les groupes fonctionnels de surface réactifs R¹ et les groupes fonctionnels non réactifs ou partiellement réactifs R² et R³ sont liés au moyen d'un réseau d'oxygène, où R¹ est en une quantité allant jusqu'à 98% en poids, R² et R³ sont en une quantité de 0 à 97% en poids sur la surface des particules réactives, où R¹ comprend des radicaux choisis dans le groupe constitué par les esters métalliques d'acides contenant R⁴; NCO; les groupes uréthanes, un époxy, un anhydride d'acide carbonique; les systèmes à liaison double C=C; OH; les alcools liés à de l'oxygène, les esters, les éthers; les adjuvants pour chélates; COOH; NH₂; NHR⁴ et les liants réactifs,
R² comprend des radicaux choisis dans le groupe constitué par les composés aromatiques, les composés aliphatiques, les dérivés d'acides gras; les esters et éthers,
R³ comprend des radicaux de résines, et
R⁴ comprend des radicaux choisis dans le groupe constitué par les résines d'acrylate, phénoliques, de mélamine, de polyuréthane, de polyester, de polyesterimide, de polysulfure, époxy, de polyamide, de polyvinylformal, les composés aromatiques, les composés aliphatiques, les esters, les éthers, les alcoolates, les matières grasses et les adjuvants pour chélates.

6. Composition de revêtement auto-adhésive selon la revendication 1, dans laquelle les nanoparticules sont des particules non réactives à base d'un réseau éléments-oxygène, où les éléments sont choisis dans le groupe constitué par le silicium, l'aluminium, le zinc, l'étain, le bore, le germanium, le gallium, le plomb, les métaux de transition, les lanthanides et les actinides.

7. Composition de revêtement auto-adhésive selon la revendication 6, dans laquelle de la silice, de l'oxyde d'aluminium et/ou de l'oxyde de titane sont utilisés en tant que nanoparticules dans une solution ou dispersion colloïdale.

8. Composition de revêtement auto-adhésive selon la revendication 2, dans laquelle au moins un agent durcisseur choisi dans le groupe constitué par le dicyandiamide, un isocyanate bloqué et un acide de Lewis, 100% de substances solides, est utilisé.

9. Composition de revêtement auto-adhésive selon la revendication 3, dans laquelle au moins un argent durcisseur choisi dans le groupe constitué par une résine phénolique, un acide carboxylique, un anhydride et un acide de Lewis, 100% de substances solides, est utilisé.

10. Composition de revêtement auto-adhésive selon la revendication 1, dans laquelle un ou plusieurs composés organométalliques choisis dans le groupe constitué par un ester de l'acide ortho-titanique, un ester de l'acide ortho-zirconique, un silane, un silicate et titanate d'éthyle sont de plus utilisés.

11. Procédé pour la fabrication de noyaux de feuilles d'acier électriques, comprenant les étapes suivantes
a) application d'au moins une couche de revêtement de la composition selon la revendication 1 sur la surface de la feuille d'acier électrique,
b) séchage de la couche appliquée sous une température augmentée, et
c) assemblage des feuilles d'acier revêtues pour former un noyau de feuilles, et adhésion des feuilles entre elles par durcissement thermique.

12. Procédé pour la fabrication de noyaux de feuilles d'acier électriques, comprenant les étapes suivantes
a) application d'au moins une couche de revêtement de la composition selon la revendication 2 sur la surface de la feuille d'acier électrique,
b) séchage de la couche appliquée sous une température augmentée, et
c) assemblage des feuilles d'acier revêtues pour former un noyau de feuilles, et adhésion des feuilles entre elles par durcissement thermique.

13. Procédé pour la fabrication de noyaux de feuilles d'acier électriques, comprenant les étapes suivantes
a) application d'au moins une couche de revêtement de la composition selon la revendication 3 sur la surface de la feuille d'acier électrique,
b) séchage de la couche appliquée sous une température augmentée, et
c) assemblage des feuilles d'acier revêtues pour former un noyau de feuilles, et adhésion des feuilles entre elles par durcissement thermique.

14. Procédé selon la revendication 11, dans lequel la composition est préparée en produisant une dispersion époxy en mélangeant la résine époxy avec de l'eau ou en produisant un mélange époxy avec au moins un solvant organique puis en ajoutant l'agent durcisseur et les autres constituants de la composition.

15. Procédé selon la revendication 11, dans lequel la composition est appliquée sur la feuille d'acier sous la forme d'un revêtement d'une couche ayant une épaisseur de couche sèche de 3 à 8µm.

16. Noyau de feuilles d'acier électriques pour l'utilisation dans un matériel électrique fabriqué par le procédé selon la revendication 11.
